# EUROPEAN PATENT APPLICATION

(11) **EP 2 684 686 A1**
(43) Date of publication of application: **15.01.2014**
(21) Application number: 13175938.3
(22) Date of filing: 10.07.2013
(51) Int. Cl.: B32B 7/06, B32B 27/08, B32B 27/20, B32B 27/32

(54) **Film Structures Containing a Biaxially Oriented Film with two Extruded Polyolefin Layers**

(30) Priority: 10.07.2012 US 201261670028 P; 14.03.2013 US 201313804304
(71) Applicant: TORAY PLASTICS (AMERICA), INC., North Kingstown, RI 02582-7500 (US)
(72) Inventor: Narkevicius, Scott, South Kingstown, RI 02879 (US); Sharps, Gordon Vincent, North Kingstown, RI 02852-7500 (US); Montcrieff, Jon Ian, Foxborough, MA 02035 (US); Siu, Roberto, Providence, RI 02903 (US); Holovach, John, North Kingstown RI 02852-7500 (US); Manuel, Paige, North Kingstown RI 02852-7500 (US)
(74) Representative: Glawe, Delfs, Moll

(57) **Abstract**

Film structures containing a biaxially oriented film with an extruded polyolefin layer on each side of the biaxially oriented film are obtained. One polyolefin layer may, for example, be fin sealed to exhibit a peelable heat sealable performance. The other polyolefin layer may exhibit a paper like appearance and may be lap sealable.

## Description

### Cross-Reference to Related Application

This application claims the benefit of U.S. Provisional Patent Application Serial No. 61/670,028, filed July 10, 2012, the entirety of which is incorporated herein by reference.

### Field of the Invention

This invention relates to film structures containing a biaxially oriented film with two extruded polyolefin layers which can exhibit a peelable heat seal performance on one side of the film structure and a paper-like appearance and feel on the other side.

### Background of the Invention

The food packaging industry is constantly in search of stronger, more durable bags that are easy to open and that provide an old fashioned, traditional look, such as the look that paper provides.

The food packaging industry is also searching for compositions that enable bags to be made at a lower cost. Accordingly, attempts have been made to reduce cost by using thin films because bags fabricated from lower thickness films typically require less materials to produce. The amount of thermoplastic elastomer used to make a film directly correlates to the overall cost of manufacturing the bag.
Therefore, it is desirable to use lower thickness films to reduce the amount of material used, and thus the cost of the film. It is also desired to improve the seal strengths of conventional bags in order to reduce the cost of materials, while at the same time, make them peelable.

Furthermore, it is desired that some conventional bags form a barrier to gases and moisture from the outside environment. Bags that exhibit good barrier properties, such as being able to reduce or eliminate moisture and gas migration though the bag, are also desired. Oxygen migration in particular should be minimized because any oxygen that enters the bag may cause the contents of the bag, such as meat products, to spoil and/or discolor.

### Summary of the Invention

Described are film structures containing a biaxially oriented film with two extruded polyolefin layers. The film structure can exhibit both a peelable heat seal performance and a paper-like appearance.

In one embodiment, the film structure may include a biaxially oriented film. One side of the biaxially oriented film may include an extruded peelable, heat sealable polyolefin layer. On the side of the biaxially oriented film opposite the extruded peelable, heat sealable polyolefin layer, there can be an extruded paper-like polyolefin layer. The extruded peelable, heat sealable polyolefin layer and/or the extruded paper-like polyolefm layer may be directly on the side of the biaxially oriented film. Preferably, the film structure has a total thickness of less than 20 mils.

The extruded peelable, heat sealable polyolefin layer may have a 200-3000 gm/in peelable heat seal strength when fin sealed at 350°F, 0.5 sec, and 30 psia. Preferably, the extruded peelable, heat sealable polyolefm layer is 5-300 microns thick.

The extruded paper-like polyolefin layer may be extrusion coated on a matte chill roll to enhance the opacity. Preferably, the extruded paper-like polyolefin layer has an opacity value in the 40-80 range. In addition, the extruded paper-like polyolefm layer may be 5-200 microns thick.

A method of making a film structure can include extrusion coating a first side of a biaxially oriented film with a peelable, heat sealable polyolefm layer and extrusion coating a second side of the biaxially oriented film with a paper-like polyolefin layer. The method can further include chilling the extrusion coated second side of the biaxially oriented film on a matte chill roll to enhance the opacity.

In addition, a method of making a film structure may include fin sealing the peelable, heat sealable polyolefm layer and/or lap sealing the paper-like polyolefin layer. A finishing process can be used on the paper-like polyolefin layer to allow for a paper like texture. Preferably, the film structure can be formed into a food package.

### Brief Description of the Drawings

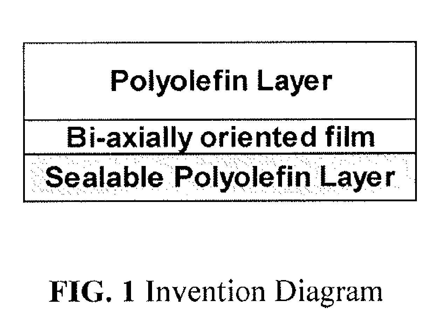

Fig. 1 is a cross sectional view of a film structure containing a biaxially oriented film with two extruded polyolefin layers.

### Detailed Description of the Invention

This invention relates to film structures containing a biaxially oriented film with two extruded polyolefin layers. The extrusion coated film structures can exhibit on one side a peelable heat seal performance when fin sealed, whereas on the other side they can exhibit a paper like appearance and feel, which can, for example, be lap sealed. The described film structures allow for cost effective and manufacturing efficient processing of value added films to be used in variety of packaging applications. The film structures can be expanded to include metalized films, barrier films or extruded layers, tinted films or extruded layers, energy management films or colored extruded layers. The extruded layer can provide fin or lap seals to the ultimate package and those seals can be peelable.

In some embodiments, the film structure can include a biaxially oriented film on which polyolefin layers can be extruded on either side of the biaxially oriented film. A cross sectional view of such an embodiment containing a biaxially oriented film with two extruded polyolefin layers is depicted in Fig. 1. One side of the extrusion coated film structure can be fin sealed to exhibit a peelable heat seal performance, whereas the other side can be lap sealed.

The biaxially oriented film can be selected from a group consisting of oriented polystyrene, oriented crystalline and semi-crystalline polyester and copolyester, oriented amorphous copolyester and polyester, oriented polypropylene, oriented polyamide, oriented polylactic acid, acrylics, and polycarbonates.

The polyolefin layers can include a polymer or blend of polymers selected from a group consisting of low density polyethylene, linear low-density polyethylene, medium density polyethylene, high-density polyethylene, propylene-ethylene copolymers; ethylene/vinyl acetate copolymer (EVA); ethylene/methacrylate copolymer; ethylene/n-butyl acrylate; ethylene/vinyl acetate/carbon monoxide; ethylene/acrylic acid (EAA); ethylene/methacrylic acid (EMAA); ionomeric salts of ethylene/carboxylic acid copolymers such as sodium, zinc or potassium ionomers of
EMAA or EAA; maleic anhydride grafted EVA; maleic anhydride grafted linear low- density polyethylene; and maleic anhydride grafted polypropylene.

The extruded polyolefin layers applied on either side of the biaxially oriented film can have different thicknesses. One side can be thicker for fin seal performance. That thickness is typically in the 5 to 300 micron range. The fin sealable side typically provides peelable seals in the 200 to 3,000 gm/in range when sealed at 350°F, 0.5 sec, and 30 psia. The other side can be thinner for lap seal performance. That thickness is typically in the 5 to 200 micron range. The lap sealable side is typically colored or tinted to provide an opacity value in the 40 to 80 range. A finishing process can allow for a paper like texture on the lap sealable layer. The side with the paper like surface can be extrusion coated on a matte chill roll to enhance the opacity of such surface.

The extrusion coated film used in the present invention can have any total thickness desired, so long as the film provides the desired properties for the particular packaging operation in which the film is used. Preferably, the film has a total thickness of less than about 20 mils, more preferably the film has a total thickness of about 0.25 to 20 mils, still more preferably of about 0.25 to 10 mils, and yet still more preferably, of about 0.5 to 5 mils.

This application discloses several numerical ranges. The numerical ranges disclosed inherently support any range or value within the disclosed numerical ranges even though a precise range limitation is not stated verbatim in the specification because this invention can be practiced throughout the disclosed numerical ranges.

The above description is presented to enable a person skilled in the art to make and use the invention, and is provided in the context of a particular application and its requirements. Various modifications to the preferred embodiments will be readily apparent to those skilled in the art, and the generic principles defined herein may be applied to other embodiments and applications without departing from the spirit and scope of the invention. Thus, this invention is not intended to be limited to the embodiments shown, but is to be accorded the widest scope consistent with the principles and features disclosed herein. Finally, the entire disclosure of the patents and publications referred in this application are hereby incorporated herein by reference.

## Claims

1. A film structure comprising:
a biaxially oriented film comprising a first side and a second side; an extruded peelable, heat sealable polyolefin layer on the first side of the biaxially oriented film; and
an extruded paper-like polyolefin layer on the second side of the biaxially oriented film.

2. The film structure of claim 1, wherein the extruded peelable, heat sealable polyolefin layer is directly on the first side of the biaxially oriented film and/or wherein the extruded paper-like polyolefin layer is directly on the second side of the biaxially oriented film.

3. The film structure of claim 1, wherein the extruded peelable, heat sealable layer has a 200-3000 gm/in peelable heat seal strength when fin sealed at 350°F, 0.5 sec, and 30 psia.

4. The film structure of claim 1, wherein the extruded paper-like polyolefin layer has an opacity value in the 40-80 range.

5. The film structure of claim 1, wherein the extruded peelable, heat sealable polyolefin layer is 5-300 microns, preferably 5-200 microns, thick.

6. The film structure of claim 1, wherein the extruded paper-like polyolefin layer is extrusion coated on a matte chill roll to enhance the opacity.

7. A method of making a film structure comprising:
extrusion coating a first side of a biaxially oriented film with a peelable, heat sealable polyolefin layer; and
extrusion coating a second side of the biaxially oriented film with a paper-like polyolefin layer.

8. The method of claim 7, further comprising chilling the extrusion coated second side of the biaxially oriented film on a matte chill roll to enhance the opacity.

9. The method of claim 7, further comprising fin sealing the peelable, heat sealable polyolefin layer and/or lap sealing the paper-like polyolefin layer.

10. The method of claim 7, further comprising using a finishing process on the paper-like polyolefin layer to allow for a paper like texture.

11. The method of claim 7, wherein the peelable, heat sealable layer has a 200- 3000 gm/in peelable heat seal strength when fin sealed at 350°F, 0.5 sec, and 30 psia.

12. The method of claim 7, further comprising coloring or tinting the paper-like polyolefin layer to provide an opacity value in the 40-80 range.

13. The method of claim 7, wherein the peelable, heat sealable polyolefin layer is 5-300 microns, preferably 5-200 microns, thick.

14. The film structure of claim 1 or method of claim 7, wherein the film structure has a total thickness of less than 20 mils.

15. The method of claim 7, further comprising forming a food package from the film structure.
